# FASCICULE DE BREVET EUROPEEN

(11) **EP 4 082 311 B1**
(45) Date de publication et mention de la délivrance du brevet: **02.08.2023**
(21) Numéro de dépôt: 22169359.1
(22) Date de dépôt: 22.04.2022
(51) Int. Cl.: A01B 59/041

(54) **ENSEMBLE COMPRENANT UN TRACTEUR, UN OUTIL AGRICOLE ET UN DISPOSITIF D'ATTELAGE**
EINHEIT AUS EINEM TRAKTOR, EINEM LANDWIRTSCHAFTLICHEN GERÄT UND EINER ANHÄNGEVORRICHTUNG
ASSEMBLY COMPRISING A TRACTOR, AN AGRICULTURAL TOOL AND A COUPLING DEVICE

(30) Priorité: 27.04.2021 FR 2104332
(43) Date de publication de la demande: 02.11.2022
(73) Titulaire: Hydrokit, 85170 Le Poire sur Vie (FR)
(72) Inventeur: MORIN, Jean-Jacques, 85190 AIZENAY (FR); CORNU, Didier, 85120 LA CHATAIGNERAIE (FR)
(74) Mandataire: Ipsilon

(56) Documents cités:
- DE-B- 1 004 410
- GB-A- 1 329 824
- US-A- 2 775 180
- US-A- 3 207 529
- US-A- 6 089 328

## Description

L'invention concerne un ensemble comprenant un tracteur, un outil agricole et un dispositif d'attelage pour l'attelage de l'outil agricole au tracteur.

Elle concerne en particulier un ensemble comprenant un tracteur, un outil agricole et un dispositif d'attelage pour l'attelage de l'outil agricole au tracteur, le dispositif d'attelage comprenant deux bras d'attelage dits inférieurs, respectivement articulés par un premier point de liaison sur le tracteur, et par un second point de liaison sur l'outil agricole, chaque point de liaison de bras d'attelage étant défini par une articulation dite poly-axiale articulée suivant au moins deux axes, les seconds points de liaison des bras d'attelage correspondant aux points de liaison des bras d'attelage sur l'outil agricole étant plus distants entre eux que les premiers points de liaison des bras d'attelage correspondant aux points de liaison des bras d'attelage sur le tracteur.

Des ensembles comprenant un tracteur, un outil agricole et un dispositif d'attelage pour l'attelage de l'outil agricole au tracteur sont connus comme l'illustrent les brevets US 6089328 et GB 1329824.

Avec le développement des systèmes de navigation par satellite (GPS) l'agriculture s'est adaptée au guidage des outils agricoles par une cartographie de lignes à suivre au cours des différentes interventions sur un terrain agricole. Le tracteur auquel est attelé l'outil agricole peut, en raison de son poids et de la qualité du terrain liée à l'humidité ou à une inclinaison transversale, être soumis à une dérive et être décalé par rapport à sa ligne axiale théorique de déplacement. Pour éviter que cette dérive entraîne un décalage correspondant de l'outil agricole tracté, il est connu de placer sur l'outil agricole l'antenne de GPS, et d'assurer l'adaptation du dispositif d'attelage pour que la trajectoire axiale de l'outil agricole soit conservée.

Une première solution connue pour assurer cette adaptation consiste à placer entre les bras d'attelage portés par le tracteur et l'outil agricole une interface constituée d'une plateforme fixe par rapport aux bras d'attelage et au tracteur, et d'un corps fixe par rapport à l'outil tracté et coulissant sur la plateforme fixe, transversalement à la ligne suivie par l'outil agricole. En cas de dérive du tracteur, un vérin commande le coulissement du corps par rapport à la plateforme pour que l'outil tracté conserve sa trajectoire. Cette solution entraîne une augmentation du poids de l'ensemble par l'ajout de l'interface, avec une augmentation de l'instabilité au sol en raison de la pression plus importante, et une consommation de carburant plus importante.

Une deuxième solution consiste à contrôler la position des bras inférieurs d'attelage portés par le tracteur au moyen de vérins articulés d'une part sur le tracteur, à l'extérieur des bras d'attelage, et d'autre part dans la zone centrale des bras d'attelage. Un exemple de réalisation de cette solution est décrit dans le brevet US 6 089 328, où les points d'articulation des bras d'attelage sur l'outil agricole sont sensiblement plus écartés que les points d'articulation des bras d'attelage sur le tracteur. Dans cette solution, la course des vérins est limitée, ce qui limite la précision du guidage, et les efforts au milieu des bras d'attelage sont importants, ce qui entraîne un risque de rupture de bras d'attelage.

L'un des buts de l'invention est de proposer un ensemble du type précité dont le dispositif d'attelage de poids réduit est simple à installer et assure une bonne précision et dont la conception n'impose pas d'efforts supplémentaires sur les bras d'attelage.

A cet effet, l'invention a pour objet un ensemble comprenant un tracteur, un outil agricole et un dispositif d'attelage pour l'attelage de l'outil agricole au tracteur, le dispositif d'attelage comprenant deux bras d'attelage dits inférieurs, respectivement articulés par un premier point de liaison sur le tracteur, et par un second point de liaison sur l'outil agricole, chaque point de liaison de bras d'attelage étant défini par une articulation dite poly-axiale articulée suivant au moins deux axes, les seconds points de liaison des bras d'attelage correspondant aux points de liaison des bras d'attelage sur l'outil agricole étant plus distants entre eux que les premiers points de liaison des bras d'attelage correspondant aux points de liaison des bras d'attelage sur le tracteur, caractérisé en ce qu'il comprend un stabilisateur, disposé entre un point de fixation situé sur le tracteur, latéralement à l'extérieur des premiers points de liaison des bras d'attelage, et un point de fixation situé sur l'outil agricole, entre les seconds points de liaison des bras d'attelage.

La disposition du stabilisateur disposé entre le tracteur et l'outil agricole offre un grand nombre d'avantages.

Selon un mode de réalisation, le stabilisateur comprend un vérin hydraulique à double effet, porté par au moins une barre métallique, l'ensemble barre-vérin étant monté entre deux points d'articulation portés respectivement, le premier par un premier étrier de support fixé au tracteur, le second par un deuxième étrier de support fixé à l'outil agricole.

Selon un mode de réalisation, l'outil agricole comprend une traverse frontale, le premier étrier de support est fixé par une plaque vissée sous une partie appelée trompette du tracteur, et le deuxième étrier de support est fixé à la traverse frontale de l'outil agricole au moyen d'une plaque et de vis de fixation de ladite plaque à l'étrier, les vis encadrant la traverse frontale de l'outil agricole.

Selon un mode de réalisation, le vérin à double effet comprend une tige reliée à pivotement, à un axe sensiblement horizontal comportant le deuxième point d'articulation, porté par le deuxième étrier de support fixé à l'outil agricole.

Selon un mode de réalisation, le stabilisateur comporte deux barres métalliques parallèles, disposées sensiblement dans un plan vertical, et entre lesquelles passe l'un des bras d'attelage inférieurs.

Selon un mode de réalisation, les deux barres métalliques parallèles sont prolongées, vers le premier point d'articulation porté par le premier étrier de support fixé au tracteur, par des plaquettes de fixation à deux plaquettes de réglage de la longueur du stabilisateur en fonction des dimensions du tracteur et de l'outil agricole.

Selon un mode de réalisation, les deux plaquettes de réglage de la longueur du stabilisateur sont reliées au premier étrier fixé au tracteur par l'intermédiaire d'une cheville articulée d'une part, sur lesdites plaquettes, selon un premier axe sensiblement vertical et d'autre part sur ledit premier étrier selon un deuxième axe sensiblement horizontal, les deux axes étant perpendiculaires et leur point de concours correspondant au premier point d'articulation du stabilisateur. Par sensiblement, on entend à chaque fois vertical à plus ou moins 20° près ou horizontal à plus ou moins 20° près.

Selon un mode de réalisation, le stabilisateur comprend une seule barre métallique qui comporte deux plaquettes de fixation à deux plaquettes de réglage de la longueur du stabilisateur.

L'invention sera bien comprise à la lecture de la description suivante d'exemples de réalisation, en référence aux dessins annexés dans lesquels :
[Fig. 1] représente une vue partielle en perspective de dessus d'un exemple symbolique simplifié de réalisation d'un ensemble selon l'invention ;
[Fig. 2] représente une vue partielle en perspective de dessous d'un exemple symbolique simplifié de réalisation d'un ensemble selon l'invention ;
[Fig. 3] représente une vue d'un exemple de réalisation d'un stabilisateur pour outil agricole selon l'invention ;
[Fig. 4] représente une vue d'un autre exemple de réalisation d'un stabilisateur pour outil agricole selon l'invention ;
[Fig. 5] représente un schéma de principe en vue de dessous, d'une partie d'un ensemble selon l'invention ;
[Fig. 6] représente un schéma de principe en vue de dessous de la correction apportée par le stabilisateur selon l'invention à l'outil agricole tracté, en cas de dérive du tracteur dans un premier sens ;
[Fig. 7] représente un schéma de principe en vue de dessous de la correction apportée par le stabilisateur selon l'invention à l'outil agricole tracté, en cas de dérive du tracteur dans un deuxième sens opposé au premier.

L'ensemble selon l'invention comprend un tracteur 1 représenté symboliquement, un outil agricole 2 symbolisé par sa traverse frontale, seule représentée au dessin et un dispositif d'attelage pour l'attelage de l'outil agricole 2 au tracteur 1. Ce dispositif d'attelage est disposé entre le tracteur 1 et l'outil agricole 2. De manière connue en soi, le dispositif d'attelage de l'outil agricole 2 au tracteur 1 comporte deux bras d'attelage inférieurs, respectivement gauche 3 et droite 4 (par rapport au sens de la marche du tracteur 1 symbolisé par la flèche 5). Le troisième point d'attelage au tracteur 1, correspondant au bras d'attelage supérieur n'est pas représenté.

Chacun des bras d'attelage inférieurs 3, 4, est associé à un bras de relevage, respectivement 6, 7, et à une chandelle, respectivement 8, 9.

Chacun des bras d'attelage 3, 4 a un premier point de liaison au tracteur 1, respectivement 10, 11, et un second point de liaison à l'outil agricole 2, respectivement 12, 13. Ces premiers et seconds points de liaison sont définis chacun par une articulation poly-axiale articulée suivant au moins deux axes. Cette articulation est formée ici par une rotule. Ces points de liaison assurent donc aux bras d'attelage 3, 4 une possibilité d'orientation au moins par rapport à un axe sensiblement horizontal et un axe sensiblement vertical. Les seconds points de liaison 12, 13 des bras d'attelage 3, 4 sur l'outil agricole 2 sont plus distants entre eux que les premiers points de liaison 10, 11 des bras d'attelage 3, 4 sur le tracteur 1.

Selon l'invention, une liaison mécanique est assurée entre le tracteur 1 et l'outil agricole 2 au moyen d'un stabilisateur 14. Ce stabilisateur 14 est disposé entre un point de fixation situé sur le tracteur 1, latéralement à l'extérieur des premiers points de liaison 10, 11 des bras 3, 4 d'attelage, et un point de fixation situé sur l'outil agricole 2, entre les seconds points de liaison 12, 13 des bras d'attelage. Le point de fixation du stabilisateur 14 situé sur le tracteur 1 s'étend donc d'un côté ou de l'autre de l'intervalle formé par les premiers points de liaison 10,11 des bras 3,4 d'attelage. La référence est prise par rapport au sens de marche du tracteur. Ainsi, dans l'exemple représenté, le point de fixation du stabilisateur 14 situé sur le tracteur 1 s'étend du côté gauche de l'intervalle formé par les premiers points de liaison 10,11 des bras 3,4 d'attelage pris par rapport au sens d'avancement du tracteur mais aurait pu de manière équivalente s'étendre du côté droit de l'intervalle. Ce stabilisateur 14 présente un premier point d'articulation 15 et un second point d'articulation 16. Le premier point d'articulation 15 est porté par un premier étrier 17 de support fixé au tracteur 1. Le second point d'articulation 16 est porté par un deuxième étrier 18 fixé à l'outil agricole 2. Le premier étrier 17 est fixé par une plaque 19 vissée sous la trompette 20 du tracteur 1. Le deuxième étrier 18 de support est fixé à la traverse frontale de l'outil agricole 2 au moyen d'une plaque 21 et de vis 22 de fixation de la plaque 21 à l'étrier 18, les vis, au nombre de 4 encadrant la traverse frontale de l'outil agricole 2.

Le premier étrier 17 assure la fixation du stabilisateur 14 sur le tracteur 1, en un point situé latéralement à l'extérieur des points d'articulation 10, 11 des bras d'attelage 3, 4.

Le deuxième étrier 18 assure la fixation du stabilisateur 14 sur l'outil agricole 2, en un point situé entre les points d'articulation 12, 13 des bras d'attelage 3, 4.

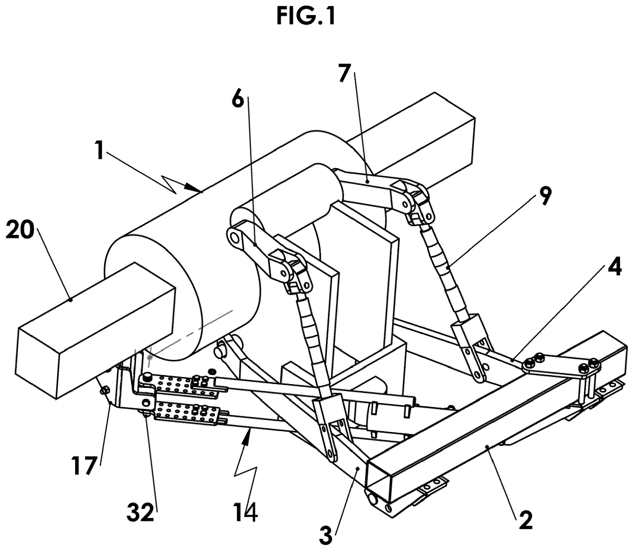

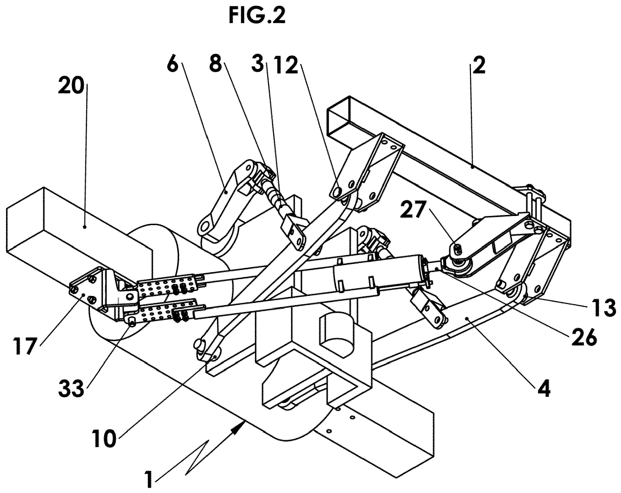

Le stabilisateur 14 comprend un vérin 23 hydraulique à double effet, porté par au moins une barre métallique 24. Dans l'exemple de réalisation des Figs. 1 à 3, le stabilisateur 14 comporte deux barres métalliques 24, 25 parallèles, disposées dans un plan sensiblement vertical. Avantageusement, le bras d'attelage 3 passe entre les deux barres 24, 25. L'ensemble de la barre 24, ou des deux barres 24, 25, et du vérin 23 est monté entre deux points d'articulation portés respectivement, le premier 15, par le premier étrier 17 de support, fixé au tracteur 1, le second 16, par le deuxième étrier 18 de support, fixé à l'outil agricole 2.

Le vérin 23 hydraulique à double effet comprend une tige 26 couplée à pivotement au deuxième étrier 18. En particulier, la tige 26 du vérin 23 est reliée à pivotement, à un axe 27 porté par le deuxième étrier 18, cet axe 27 s'étendant sensiblement horizontalement à plus ou moins 20° près. Le point d'intersection du plan sensiblement vertical des barres 24, 25 et de l'axe géométrique de l'axe 27 correspond au second point d'articulation 16 du stabilisateur côté outil agricole 2.

Les barres 24, 25 du stabilisateur 14 se prolongent vers le premier étrier 17 de support fixé au tracteur 1, par des plaquettes 28, 29, de fixation à deux plaquettes 30, 31 de réglage de la longueur du stabilisateur 14 en fonction des dimensions du tracteur 1, de l'outil agricole 2 et des bras d'attelage 3, 4.

Les deux plaquettes 30, 31 de réglage de la longueur du stabilisateur 14 sont munies de séries de trous aptes à assurer le passage de vis pour réaliser la fixation des plaquettes 28, 29 de fixation aux positions convenables.

Les deux plaquettes 30, 31 de réglage de la longueur du stabilisateur 14 sont couplées au premier étrier 17 par une liaison cardan. En particulier, les deux plaquettes 30, 31 de réglage de la longueur du stabilisateur 14 sont fixées à une cheville 32 par un axe vertical 33. La cheville 32 est elle-même fixée au premier étrier 17 par un axe horizontal 34. Le point de concours des axes géométriques des axes 33 et 34 correspond au premier point d'articulation 15 du stabilisateur 14.

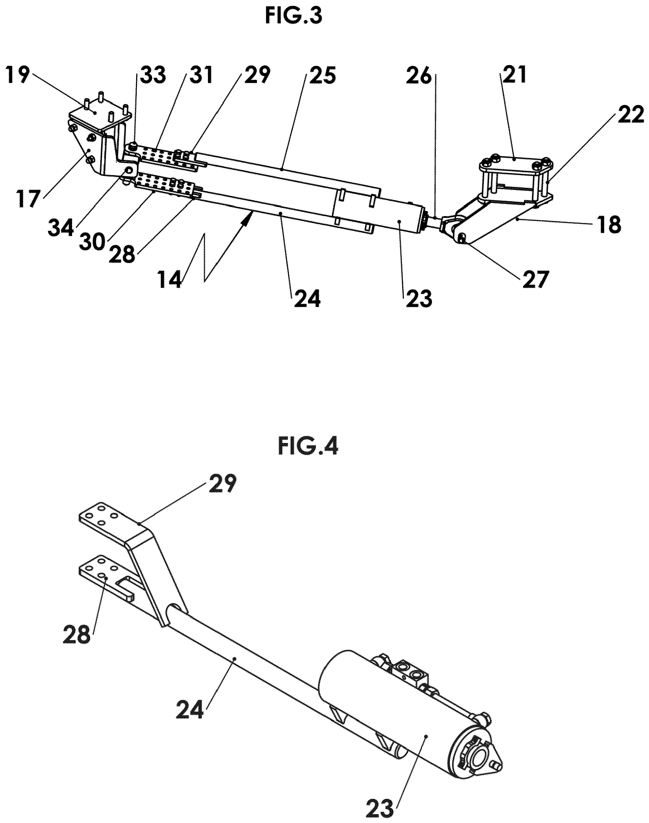

Dans l'exemple de réalisation de la Fig. 4, le vérin hydraulique 23 du stabilisateur 14 n'est porté que par une barre métallique 24. Cette barre 24 porte les deux plaquettes de fixation 28 et 29.

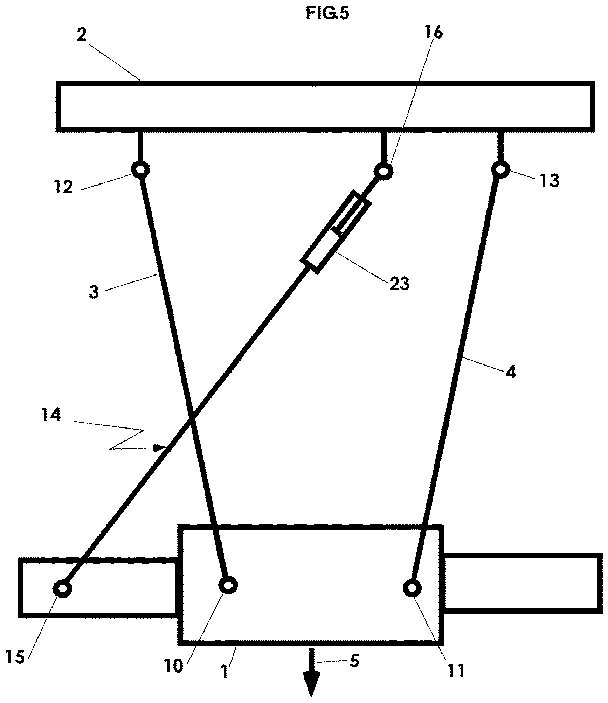

Le fonctionnement du stabilisateur 24 s'analyse de la manière suivante en liaison avec les Figs. 5 à 7.

Lorsque le tracteur 1 suit sa ligne de déplacement théorique, le stabilisateur est au repos et ne joue pas de rôle actif.

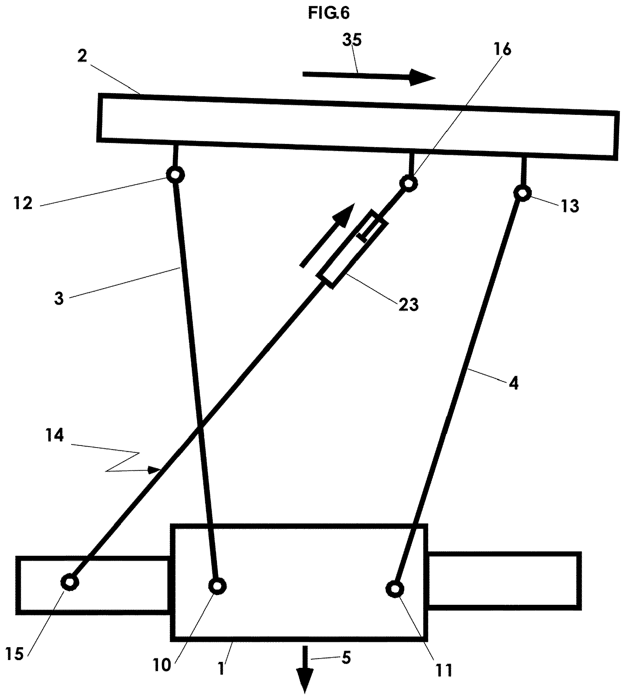

Si le tracteur 1, en raison de l'inclinaison du terrain ou d'un sol boueux, dévie légèrement à gauche de sa ligne de progression théorique, le vérin hydraulique 23 est sollicité pour repousser l'outil agricole 2 vers la droite de façon à ce qu'il reste sur sa ligne de progression théorique. Le vérin 23 va donc allonger l'espace entre ses deux points d'articulation 15 et 16 pour déplacer l'outil 2 par rapport au tracteur 1, dans la direction de la flèche 35 (Fig. 6), c'est-à-dire vers la droite par rapport au tracteur 1.

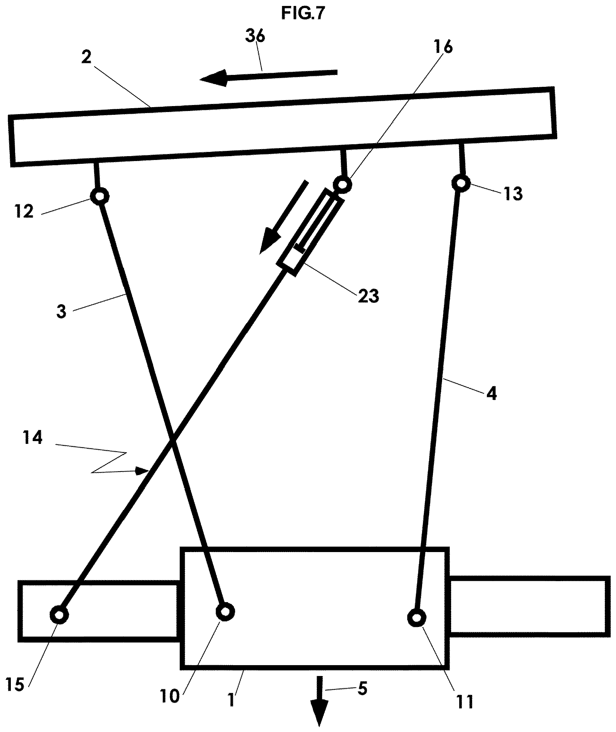

Si le tracteur 1 dévie légèrement à droite de sa ligne de progression théorique, le vérin hydraulique 23 est sollicité pour retenir l'outil agricole 2 vers la gauche de façon qu'il reste sur sa ligne de progression théorique. Le vérin 23 va donc raccourcir l'espace entre ses deux points d'articulation 15 et 16 pour déplacer l'outil 2 par rapport au tracteur 1, dans la direction de la flèche 36 (Fig. 7), c'est-à-dire vers la gauche par rapport au tracteur 1.

## Revendications

1. Ensemble comprenant un tracteur (1), un outil agricole (2) et un dispositif d'attelage pour l'attelage de l'outil agricole (2) au tracteur (1), le dispositif d'attelage comprenant deux bras (3, 4) d'attelage dits inférieurs, respectivement articulés par un premier point de liaison (10,11) sur le tracteur (1), et par un second point de liaison (12,13) sur l'outil agricole (2), chaque point de liaison de bras d'attelage étant défini par une articulation dite poly-axiale articulée suivant au moins deux axes, les seconds points de liaison (12, 13) des bras (3, 4) d'attelage correspondant aux points de liaison des bras (3, 4) d'attelage sur l'outil agricole (2) étant plus distants entre eux que les premiers points de liaison (10, 11) des bras (3, 4) d'attelage correspondant aux points de liaison des bras (3, 4) d'attelage sur le tracteur (1), **caractérisé en ce qu'**il comprend un stabilisateur (14), disposé entre un point de fixation situé sur le tracteur (1), latéralement à l'extérieur des premiers points de liaison (10, 11) des bras (3, 4) d'attelage, et un point de fixation situé sur l'outil agricole (2), entre les seconds points de liaison (12, 13) des bras d'attelage.

2. Ensemble selon la revendication 1 **caractérisé en ce que** le stabilisateur (14) comprend un vérin (23) hydraulique à double effet, porté par au moins une barre métallique (24), l'ensemble barre-vérin étant monté entre deux points d'articulation (15, 16) portés respectivement, le premier (15) par un premier étrier (17) de support fixé au tracteur (1), le second (16) par un deuxième étrier (18) de support fixé à l'outil agricole (2).

3. Ensemble selon la revendication 2, **caractérisé en ce que** l'outil agricole (2) comprend une traverse frontale, **en ce que** le premier étrier (17) de support est fixé par une plaque (19) vissée sous une partie appelée trompette (20) du tracteur (1), et le deuxième étrier (18) de support est fixé à la traverse frontale de l'outil agricole (2) au moyen d'une plaque (21) et de vis (22) de fixation de ladite plaque (21) à l'étrier (18), les vis (22) encadrant la traverse frontale de l'outil agricole (2).

4. Ensemble selon l'une des revendications 2 ou 3, **caractérisé en ce que** le vérin (23) à double effet comprend une tige (26) reliée à pivotement, à un axe (27) sensiblement horizontal comportant le second point d'articulation (16), porté par le deuxième étrier (18) de support fixé à l'outil agricole (2).

5. Ensemble selon l'une des revendications 2 à 4, **caractérisé en ce que** le stabilisateur (14) comporte deux barres (24, 25) métalliques parallèles, disposées sensiblement dans un plan vertical, et entre lesquelles passe l'un (3) des bras (3, 4) d'attelage inférieurs.

6. Ensemble selon la revendication 5 **caractérisé en ce que** les deux barres (24, 25) métalliques, parallèles sont prolongées, vers le premier point d'articulation (15) porté par le premier étrier (17) de support fixé au tracteur (1), par des plaquettes (28, 29) de fixation à deux plaquettes (30, 31) de réglage de la longueur du stabilisateur (14) en fonction des dimensions du tracteur (1) et de l'outil agricole (2).

7. Ensemble selon la revendication 6 **caractérisé en ce que** les deux plaquettes (30, 31) de réglage de la longueur du stabilisateur (14) sont reliées au premier étrier (17), fixé au tracteur (1) par l'intermédiaire d'une cheville (32) articulée d'une part sur lesdites plaquettes (30, 31) selon un premier axe (33) sensiblement vertical et d'autre part sur ledit premier étrier (17) selon un deuxième axe (34) sensiblement horizontal, les deux axes (33, 34) étant perpendiculaires et leur point de concours correspondant au premier point (15) d'articulation du stabilisateur (14).

8. Ensemble selon la revendication 2 **caractérisé en ce que** le stabilisateur (14) comprend une seule barre (24) métallique qui porte deux plaquettes (28, 29) de fixation à deux plaquettes (30, 31) de réglage de la longueur du stabilisateur (14).

## Patentansprüche

1. Einheit, umfassend einen Traktor (1), ein landwirtschaftliches Gerät (2) und eine Anhängevorrichtung zum Anhängen des landwirtschaftlichen Geräts (2) an den Traktor (1), wobei die Anhängevorrichtung zwei als innere bezeichnete Anhängearme (3, 4) umfasst, die jeweils durch einen ersten Verbindungspunkt (10, 11) am Traktor (1) und durch einen zweiten Verbindungspunkt (12,13) am landwirtschaftlichen Gerät (2) angelenkt sind, wobei jeder Verbindungspunkt eines Anhängearms durch ein als mehraxial bezeichnetes Gelenk definiert ist, das gemäß mindestens zwei Achsen angelenkt ist, wobei die zweiten Verbindungspunkte (12, 13) der Anhängearme (3, 4), die den Verbindungspunkten der Anhängearme (3, 4) am landwirtschaftlichen Gerät (2) entsprechen, weiter voneinander beabstandet sind als die ersten Verbindungspunkte (10, 11) der Anhängearme (3, 4), die den Verbindungspunkten der Anhängearme (3, 4) am Traktor (1) entsprechen, **dadurch gekennzeichnet, dass** sie einen Stabilisator (14), umfasst, der zwischen einem Befestigungspunkt angeordnet ist, der sich am Traktor (1) seitlich außerhalb der ersten Verbindungspunkte (10, 11) der Anhängearme (3, 4) befindet und einem Befestigungspunkt, der sich am landwirtschaftlichen Gerät (2) zwischen den zweiten Verbindungspunkten (12, 13) der Anhängearm befindet.

2. Einheit nach Anspruch 1, **dadurch gekennzeichnet, dass** der Stabilisator (14) einen Doppeleffekt-Hydraulikzylinder (23) umfasst, der von mindestens einer Metallstange (24) getragen wird, wobei die Einheit Stange-Zylinder zwischen zwei Gelenkpunkten (15, 16) angebracht ist, die jeweils, der erste (15) von einem ersten, am Traktor (1) befestigten Haltebügel (17), der zweite (16) von einem zweiten, am landwirtschaftlichen Gerät (2) befestigten Haltebügel (18), getragen werden.

3. Einheit nach Anspruch 2, **dadurch gekennzeichnet, dass** das landwirtschaftliche Gerät (2) eine Fronttraverse umfasst, dass der erste Haltebügel (17) mittels einer Platte (19) befestigt ist, die unter einem Abschnitt verschraubt ist, die als Drucklufthorn (20) des Traktors (1) bezeichnet wird, und der zweite Haltebügel (18) an der Fronttraverse des landwirtschaftlichen Geräts (2) mittels einer Platte (21) und Befestigungsschrauben (22) der Platte (21) am Bügel (18) befestigt ist, wobei die Schrauben (22) die Fronttraverse des landwirtschaftlichen Geräts (2) einrahmen.

4. Einheit nach einem der Ansprüche 2 oder 3, **dadurch gekennzeichnet, dass** der Doppeleffekt-Zylinder (23) einen Stab (26) umfasst, der schwenkend mit einer etwa horizontalen Achse (27) verbunden ist, die den zweiten Gelenkpunkt (16) aufweist, der vom zweiten Haltebügel (18) getragen wird, der am landwirtschaftlichen Gerät (2) befestigt ist.

5. Einheit nach einem der Ansprüche 2 bis 4, **dadurch gekennzeichnet, dass** der Stabilisator (14) zwei parallele Metallstangen (24, 25) aufweist, die etwa in einer vertikalen Ebene angeordnet sind und zwischen denen der eine (3) der unteren Anhängearme (3, 4) verläuft.

6. Einheit nach Anspruch 5, **dadurch gekennzeichnet, dass** die zwei parallelen Metallstangen (24, 25) in Richtung zum ersten Gelenkpunkt (15), der vom ersten, am Traktor (1) befestigten Haltebügel (17) getragen wird, von Befestigungsplatten (28, 29) mit zwei Einstellplatten (30, 31) der Länge des Stabilisators (14) in Abhängigkeit von den Abmessungen des Traktors (1) und des landwirtschaftlichen Geräts (2) verlängert werden.

7. Einheit nach Anspruch 6, **dadurch gekennzeichnet, dass** die zwei Einstellplatten (30, 31) der Länge des Stabilisators (14) mit dem ersten, am Traktor (1) befestigten Bügel (17) über einen Zapfen (32) verbunden sind, der zum einen an den Platten (30, 31) gemäß einer ersten, etwa vertikalen Achse (33) und zum anderen an dem ersten Bügel (17) gemäß einer zweiten, etwa horizontalen Achse (34) angelenkt ist, wobei die zwei Achsen (33, 34) senkrecht sind und ihr gemeinsamer Punkt dem ersten Gelenkpunkt (15) des Stabilisators (14) entspricht.

8. Einheit nach Anspruch 2, **dadurch gekennzeichnet, dass** der Stabilisator (14) eine einzige Metallstange (24) umfasst, die zwei Befestigungsplatten (28, 29) mit zwei Einstellplatten (30, 31) der Länge des Stabilisators (14) umfasst.

## Claims

1. An assembly comprising a tractor (1), an agricultural tool (2) and a coupling device for coupling the agricultural tool (2) to the tractor (1), the coupling device comprising two coupling arms (3, 4) called lower coupling arms, respectively articulated by a first connection point (10, 11) on the tractor (1), and by a second connection point (12, 13) on the agricultural tool (2), each coupling arm connection point being defined by a so-called polyaxial articulation articulated along at least two axes, the second connection points (12, 13) of the coupling arms (3, 4) corresponding to the connection points of the coupling arms (3, 4) on the agricultural tool (2) being more distant from one another than the first connection points (10, 11) of the coupling arms (3, 4) corresponding to the connection points of the coupling arms (3, 4) on the tractor (1), **characterized in that** it comprises a stabilizer (14), arranged between an attachment point situated on the tractor (1), laterally outside the first connection points (10, 11) of the coupling arms (3, 4), and an attachment point situated on the agricultural tool (2), between the second connection points (12, 13) of the coupling arms.

2. The assembly according to claim 1, **characterized in that** the stabilizer (14) comprises a double-acting hydraulic cylinder (23), carried by at least one metal bar (24), the bar-cylinder assembly being mounted between two articulation points (15, 16), the first of which (15) is carried by a first support yoke (17) attached to the tractor (1), the second of which (16) by a second support yoke (18) attached to the agricultural tool (2), respectively.

3. The assembly according to claim 2, **characterized in that** the agricultural tool (2) comprises a front crosspiece, **in that** the first support yoke (17) is attached by a plate (19) screwed under a part called axle shaft (20) of the tractor (1), and the second support yoke (18) is attached to the front crosspiece of the agricultural tool (2) using a plate (21) and screw (22) for fastening said plate (21) to the yoke (18), the screws (22) framing the front crosspiece of the agricultural tool (2).

4. The assembly according to one of claims 2 or 3, **characterized in that** the double-acting cylinder (23) comprises a rod (26) pivotably connected to a substantially horizontal axes (27) including the second articulation point (16), carried by the second support yoke (18) attached to the agricultural tool (2).

5. The assembly according to one of claims 2 to 4, **characterized in that** the stabilizer (14) includes two parallel metal bars (24, 25), arranged substantially in a vertical plane, and between which one (3) of the lower coupling arms (3, 4) passes.

6. The assembly according to claim 5, **characterized in that** the two parallel metal bars (24, 25) are extended, toward the first articulation point (15) carried by the first support yoke (17) attached to the tractor (1), by pads (28, 29) for attachment to two pads (30, 31) for adjusting the length of the stabilizer (14) as a function of the dimensions of the tractor (1) and the agricultural tool (2).

7. The assembly according to claim 6, **characterized in that** the two pads (30, 31) for adjusting the length of the stabilizer (14) are connected to the first yoke (17), attached to the tractor (1) by means of a peg (32) articulated on the one hand on said pads (30, 31) along a first substantially vertical axis (33) and on the other hand on said first yoke (17) along a second substantially horizontal axis (34), the two axes (33, 34) being perpendicular and their point of intersection corresponding to the first articulation point (15) of the stabilizer (14).

8. The assembly according to claim 2, **characterized in that** the stabilizer (14) comprises a single metal bar (24) that carries two pads (28, 29) for attachment to two pads (30, 31) for adjusting the length of the stabilizer (14).
